# EUROPÄISCHE PATENTSCHRIFT

(11) **EP 1 151 910 B1**
(45) Veröffentlichungstag und Bekanntmachung des Hinweises auf die Patenterteilung: **27.07.2005**
(21) Anmeldenummer: 01250149.0
(22) Anmeldetag: 27.04.2001
(51) Int. Cl.: B62D 55/12

(54) **Turas für Raupenfahrwerk**
Drive tumbler for an endless track unit
Barbotin pour train de véhicule à chenilles

(30) Priorität: 03.05.2000 DE 10022080
(43) Veröffentlichungstag der Anmeldung: 07.11.2001
(73) Patentinhaber: Terex-Demag GmbH & Co. KG, 66482 Zweibrücken (DE)
(72) Erfinder: Rutz, Werner, Dipl.-Ing., 66851 Queidersbach (DE); Nöske, Ingo, Dipl.-Ing., 66482 Zweibrücken (DE)
(74) Vertreter: Meissner, Peter E., Dipl.-Ing.

(56) Entgegenhaltungen:
- WO-A-93/11022
- DE-A- 2 104 500
- GB-A- 1 602 143

## Beschreibung

Die Erfindung betrifft einen Turas für ein Raupenfahrwerk insbesondere Gittermastkran, der am Umfang mit Kettenzähnen versehen ist und mit einer Endloskette zusammenwirkt gemäß dem Oberbegriff des Patentanspruches 1.

Ein Turas der gattungsmäßigen Art ist aus der GB 1 602 143 bekannt. Dieser wirkt mit einer Endloskette zusammen und ist am Umfang mit eine Evolventenverzahnung aufweisenden Kettenzähnen versehen. Die Endloskette besteht aus mehreren eine Bodenplatte aufweisenden Kettengliedern mit zwei asymmetrisch zur Mitte und im Abstand voneinander angeordneten in Laufrichtung liegenden Führungsstegen. Zwischen den beiden Führungsstegen ist ein die beiden Stege verbindendes, tiefer liegendes nockenartiges Element angeordnet, das mit den Kettenzähnen des Turas kämmt. Die Teilkreisteilung, die sich ergibt aus Teilkreisumfang geteilt durch die Anzahl der Kettenzähne, ist über den gesamten Umfang konstant. Nachteilig bei der bekannten Lösung ist, dass bei Bergabfahrten eines Kranes dieser gebremst werden muss. Dabei kommt es infolge des in allen Segmenten vorhandenen Spiels zu einer Relativverschiebung zwischen Turas und Endloskette, so dass der Kopfbereich des davon betroffenen Kettenzahnes auf der Flanke des nockenartigen Elementes aufläuft. Im ungünstigsten Fall schert der Kettenzahn die Flanke des nockenartigen Elementes ab, was zu einer weiteren Verschlechterung der Eingriffsbedingungen führt, die sich durch ein lautes Geräusch bemerkbar machen. Auch beim Wechsel von Vorwärts- auf Rückwärtsfahrt treten die geschilderten Probleme auf.

Aus der DE 4331482 A1 ist ein Nockenwellenantrieb für PKW-Motoren in Form eines Zahnrad-Kettentriebs bekannt, der zur Unterdrückung von Heulgeräuschen infolge von Resonanzschwingungen Zahnkettenräder mit unterschiedlicher Teilung und eine Kette mit Kettengliedern unterschiedlicher Länge entsprechend der unterschiedlichen Teilung der Kettenräder vorsieht. Die Problematik einer Eingriffsverbesserung zwischen Kettenrad und Kette wird hierbei nicht angesprochen.

Aufgabe der Erfindung ist es, einen Turas der gattungsmäßigen Art, wie aus dem nächstem Stand der Technik bekannt und im GB 1602143 veröffentlicht, so weiterzuentwickeln, dass die zuvor geschilderten Nachteile vermieden werden.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung weist der Zahnkranzbereich des erfindungsgemäß ausgebildeten Turas mindestens zwei Umfangsabschnitte auf, die bei konstanter Zahnbreite mit einer von Segment zu Segment sich verändernden Teilkreisteilung versehen sind, wobei ein Segment den Zwischenraum zwischen den Zahnmitten von zwei unmittelbar aufeinander folgenden Kettenzähnen bezeichnet. Dabei gilt, dass die Summe aller abweichenden Teilkreisteilungen geteilt durch die Anzahl der Kettenzähne einen Wert ergibt, der der konstanten Teilkreisteilung entspricht. Ein weiteres Kennzeichen ist, dass bezogen auf die Drehrichtung des Turas in jedem Umfangsabschnitt die Teilkreisteilung von einem Maximalwert auf einen Minimalwert abnimmt bzw. von einem Minimalwert auf einen Maximalwert zunimmt und im Übergang von einem Umfangsabschnitt zum nächstliegenden die größte Differenz der Teilkreisteilung auftritt. Der kleinste vorkommende Minimalwert der Teilkreisteilung ist so gewählt, dass bezogen auf das in die Zahnlücke eingreifende nockenartige Element der Endloskette ein Spiel verbleibt, das unter Berücksichtigung der Fertigungstoleranzen für die Endloskette und den Turas sowie des Verschleißes der Endloskette einen Eingriff des nockenartigen Elementes in die Zahnlücke ermöglicht. Bei den Fertigungstoleranzen ist die ungünstigste Paarung (d.h.nockenartiges Element an der oberen Toleranzgrenze und Zahnlücke an der untersten Toleranzgrenze) und beim Verschleiß im wesentlichen die Längung der Endloskette zu berücksichtigen. Die mit dem erfindungsgemäßen Turas zusammenwirkende Endloskette hat gleichmäßig lange Kettenglieder, wie sie im Stand der Technik üblich sind.

Die vorgeschlagene Anordnung hat den Vorteil, das die bisher bekannten Schwierigkeiten insbesondere bei Bergabfahrt nicht mehr auftreten, da die Endloskette durch das Segment des Turas mit der engsten Teilung gehalten und damit eine Relativbewegung zwischen Turas und Endloskette verhindert wird.

Vorzugsweise weist der Zahnkranzbereich mindestens zwei gleichartig (drehsymmetrisch zur Drehachse des Turas) ausgebildete Umfangsabschnitte auf, die bei konstanter Zahnbreite mit einer von Segment zu Segment sich verändernden Teilkreisteilung versehen sind, wobei die Summe aller abweichenden Teilkreisteilungen im jeweiligen Umfangsabschnitt geteilt durch die Anzahl der Kettenzähne dieses Abschnittes einen Wert ergibt, der der konstanten Teilkreisteilung entspricht.

Im Falle einer abnehmenden Teilkreisteilung bezogen auf die Drehrichtung des Turas nimmt im jeweiligen durch einen nach- und einen voreilenden Zahn gebildeten Segment das Gesamtspiel zwischen dem nockenartigen Element und der Zahnlücke von einem Höchstwert auf einen Kleinstwert ab. Im Falle einer abnehmenden Teilkreisteilung ist es umgekehrt.

Vorzugsweise setzt sich das Gesamtspiel aus einem Teilspiel A gebildet zwischen der vorlaufenden Flanke des nachlaufenden Zahnes und der nacheilenden Flanke des nockenartigen Elementes sowie einem Teilspiel B gebildet zwischen der nachlaufenden Flanke des voreilenden Zahnes und der voreilenden Flanke des nockenartigen Elementes zusammen, wobei die Summe aus Teilspiel A und B in jedem Segment verschieden ist.

Die Umwandlung eines symmetrisch ausgebildeten Turas mit sich verändernder Teilkreisteilung in einen nichtsymmetrisch ausgebildeten Turas kann man in der Weise erreichen, dass man die Konstruktion beispielsweise für 14 Kettenzähne auslegt und danach jeden zweiten Zahn weglässt, so dass man einen Turas mit 7 Kettenzähnen erhält. Die unterschiedlichen Teilkreisteilungen zweier benachbarter Segmente eines symmetrisch ausgelegten Turas werden in einem solchen Fall einfach addiert.

Weitere Merkmale, Vorteile und Einzelheiten der Erfindung ergeben sich aus der nachfolgenden Beschreibung von einem in einer Zeichnung dargestellten Ausführungsbeispiel.

Es zeigen:
- Figur 1: als Prinzipskizze in einer Vorderansicht einen erfindungsgemäß ausgebildeten Turas
- Figur 2: in einer Vergrößerung ein Segment des Zahnkranzbereiches
- Figur 3: in einer Vorderansicht ein Ausführungsbeispiel im Zusammenwirken mit einer Endloskette.

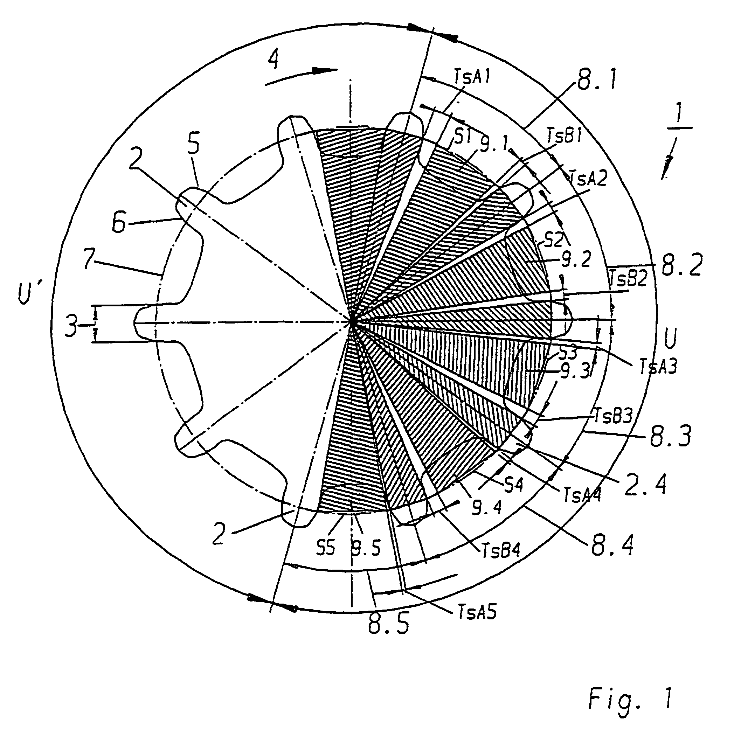

In Figur 1 ist als Prinzipskizze in einer Vorderansicht ein erfindungsgemäß ausgebildeter Turas 1 dargestellt. In diesem Ausführungsbeispiel ist er mit zehn gleichartig ausgebildeten Kettenzähnen 2 versehen, die alle eine gleiche Querschnittsform und gleiche Zahnbreite 3 aufweisen. Da für das Verständnis der nachfolgenden Ausführung die Drehrichtung 4 des Turas 1 von Bedeutung ist, ist diese mit einem Drehpfeil gekennzeichnet. Die jeweils vorauseilende 5 als auch die jeweils nacheilende Flanke 6 jedes Zahnes 2 hat in diesem Ausführungsbeispiel die Form einer Evolvente, wobei für die nachfolgend erläuterte Erfindung die Zahnform ohne Bedeutung ist. Die Teilkreisteilung ergibt sich aus der Division des Teilkreisumfangs, also des mit π multiplizierten Teilkreisdurchmessers 7 durch die Anzahl der Zähne 2. Bei den bekannten Turasrädem würde bei einer Zähnezahl von zehn die Teilkreisteilung konstant 36° betragen, wenn man den Teilkreisumfang im Winkelmaß, d. h. 360° ausdrückt. Vorzugsweise weist der in Figur 1 dargestellte Turas zwei gleichartig ausgebildete Umfangsabschnitte U und U' auf mit je 180° Umfangserstreckung. Die nachfolgenden Erläuterungen beziehen sich auf den hier rechts liegenden Umfangsabschnitt U. Erfindungsgemäß ist in diesem Umfangsabschnitt U die Teilkreisteilung nicht konstant, sondern in Drehrichtung 4 des Turas 1 gesehen von einem Maximalwert 8.1 auf einen Minimalwert 8.5 abnehmend. Die Summe aller Teilkreisteilungen 8.1-8.5 aller Segmente S1-S5 in diesem Umfangsabschnitt U beträgt 180°. Teilt man die 180° durch die Anzahl der Zähnezahl, hier 5, dann ergibt sich die schon zuvor erwähnte konstante Teilkreisteilung von 36°.

Eine andere Betrachtungsweise ergibt sich dadurch, wenn man die Überschreitung des Konstantwertes von 36° mit einem Pluszeichen versieht, und die Unterschreitung dieses Wertes mit einem Minuszeichen, dann ergeben sich folgende Bedingungen. S1 = +α°; S2 = +β°; S3 = +γ°; S4 = +δ°; S5 = ε° wobei δ<γ<β<α ist. Die Summe der Überschreitungen (+) der Segmente 1-4 ist a= (α+β+γ+δ) und die Summe der Unterschreitungen (-) des Segmentes 5 ist -a= (ε). Somit heben sich die Überschreitungen und Unterschreitungen gegenseitig auf. Um zu verdeutlichen, wie sich diese unterschiedliche Teilkreisteilung auf das Zusammenwirken mit dem nockenartigen Element 9 der Endloskette auswirkt, ist als schraffiertes Feld der Eingriff des nockenartigen Elementes in die jeweilige Zahnlücke eingezeichnet worden. Die jeweilige Zahnlücke Zᵢ ergibt sich aus der Differenz zwischen der voreilenden Flanke 5ᵢ des nacheilenden Zahnes 2ᵢ und der nacheilenden Flanke 6ᵢ₊₁ des voreilenden Zahnes 2ᵢ₊₁.

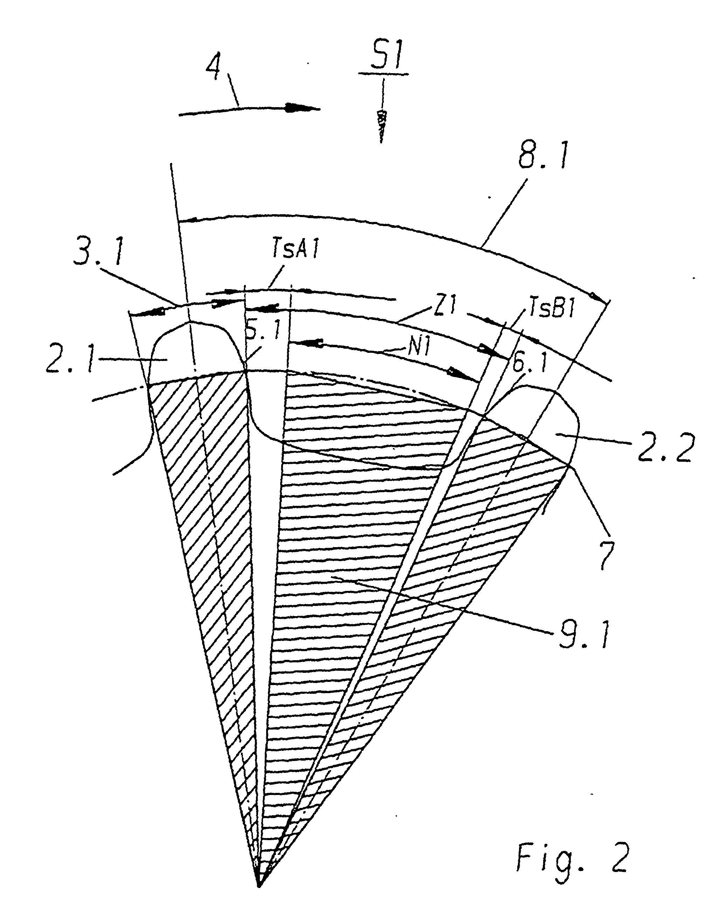

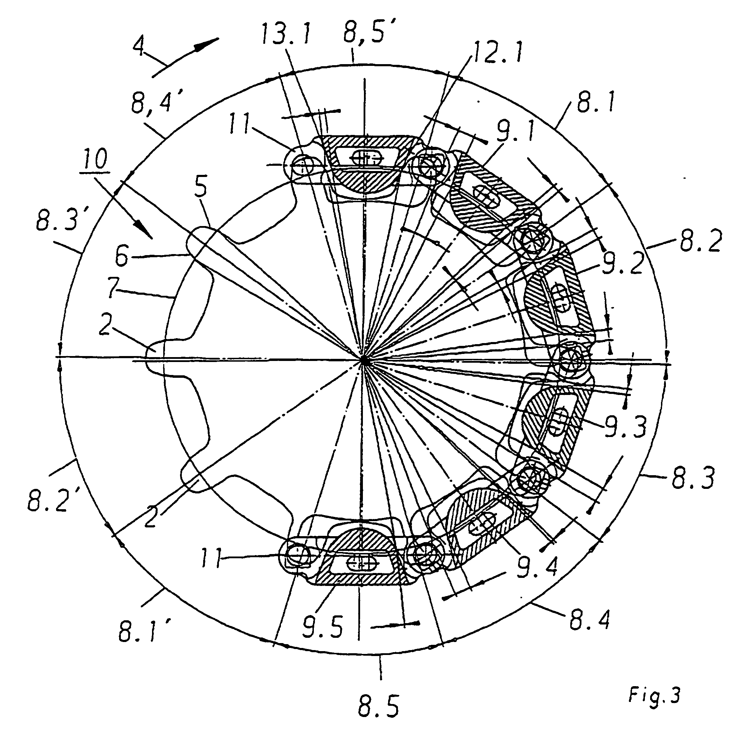

In Figur 2 sind in einer vergrößerten Darstellung die Verhältnisse für das erste Segment S1 wiedergegeben. Das Bogenmaß der Zahnlücke Z1 des ersten Segmentes S1, immer bezogen auf den Teilkreisdurchmesser 7, beträgt Teilkreisteilung 8.1 minus der Zahnbreite 3 in Bogenmaß ausgedrückt. Diese Umfangserstreckung Z1 muss in Relation gesetzt werden zur Erstreckung N1 des nockenartigen Elementes 9.1. Die Differenz zwischen der Zahnlücke Z1 und der Erstreckung N1 des nockenartigen Elements 9.1 ist das Gesamtspiel Gₛ in diesem ersten Segment S1. Wie man gut erkennen kann, ist das Gesamtspiel Gₛ aufgeteilt in ein Teilspiel TₛA₁ gebildet zwischen der voreilenden Flanke 5.1 des ersten Zahnes 2.1 und der nacheilenden Flanke 13 (Fig. 3) des nockenartigen Elementes 9.1 sowie einem Teilspiel TₛB1 gebildet zwischen der nacheilenden Flanke 6.1 des voreilenden Zahnes 2.2 und der voreilenden Flanke 12 (Fig. 3) des nockenartigen Elementes 9.1.

Wie in Figur 1 dargestellt, verändert sich dieses Verhältnis von TₛAᵢ zu TₛBᵢ von Segment zu Segment. Im letzten Segment S5 ist das Teilspiel TₛB5 = 0, d. h. das nockenartige Element 9.5 liegt voll an der nachlaufenden Flanke 6.5 an. Das andere Teilspiel TₛA5 ist dagegen auf den Minimalwert abgesunken. Im anschließenden Umfangsabschnitt U' sind die Verhältnisse drehsymmetrisch, d.h. es beginnt wieder mit einem Maximalwert der Teilkreisteilung und endet mit einem Minimalwert der Teilkreisteilung.

In Figur 3 ist ein ähnlicher Turas 10 wie in Figur 1 dargestellt, aber dieses Mal im Zusammenwirken mit einer Endloskette 11. Die Drehrichtung 4 soll die gleiche sein wie in Figur 1. Die Teilkreisverhältnisse sind aber etwas anders, da zum einen das Mindestspiel erhöht und das Bogenmaß für das nockenartige Element verkleinert worden ist. Somit erhöhen sich entsprechend die Teilspiele TₛAᵢ bzw. TₛBᵢ.

### Bezugszeichenliste

| Nr. | Bezeichnung |
|---|---|
| 1 | Turas |
| 2 | Kettenzahn |
| 3 | Zahnbreite |
| 4 | Drehrichtung |
| 5 | vorauseilende Flanke des Kettenzahnes |
| 6 | nacheilende Flanke des Kettenzahnes |
| 7 | Teilkreisdurchmesser |
| U,U' | Umfangsabschnitt |
| 8ᵢ | Teilkreisteilung |
| Sᵢ | Segment |
| Zᵢ | Zahnlücke |
| Nᵢ | Erstreckung des nockenartigen Elementes |
| Gᵢ | Gesamtspiel |
| Tₛᵢ | Teilspiel |
| 9ᵢ | nockenartiges Element |
| 10 | Turas |
| 11 | Endloskette |
| 12 | vorauseilende Flanke des nockenartigen Elementes |
| 13 | nacheilende Flanke des nockenartigen Elementes |

## Patentansprüche

1. Turas für ein Raupenfahrwerk insbesondere für Gittermastkrane, der am Umfang mit Kettenzähnen versehen ist und mit einer Endloskette zusammenwirkt, wobei die Endloskette aus einzelnen eine Bodenplatte aufweisenden Kettengliedern besteht und jedes Kettenglied zwei symmetrisch zur Mitte und im Abstand voneinander angeordnete in Laufrichtung liegende Führungsstege aufweist und zwischen beiden Führungsstegen eine die beiden Stege verbindendes, tiefer liegendes nockenartiges Element angeordnet ist, das mit den Kettenzähnen des Turas kämmt,
**dadurch gekennzeichnet,**
**dass** der Zahnkranzbereich mindestens zwei Umfangsabschnitte (U,U') aufweist, die bei konstanter Zahnbreite (3) mit einer von Segment (Si) zu Segment (Si) sich verändernden Teilkreisteilung (8) versehen sind, wobei die Summe aller abweichenden Teilkreisteilungen (8ᵢ) des jeweiligen Umfangsabschnitts (U,U') geteilt durch die Anzahl der Kettenzähne (2) dieses Umfangsabschnitts (U,U') einen Wert ergibt, der der konstanten Teilkreisteilung entspricht und bezogen auf die Drehrichtung (4) des Turas (1) in jedem Umfangsabschnitt (U,U') die Teilkreisteilung (8) von einem Maximalwert auf einen Minimalwert abnimmt bzw. von einem Minimalwert auf einen Maximalwert zunimmt und im Übergang von einem Umfangsabschnitt (U) zum nächstliegenden (U') die größte Differenz der Teilkreisteilung (8) auftritt und der kleinste vorkommende Minimalwert der Teilkreisteilung (8) so gewählt ist, dass bezogen auf das in die Zahnlücke (Zi) eingreifende nockenartige Element (9i) der Endloskette (11) ein Spiel (Gₛᵢ) verbleibt, das unter Berücksichtigung der Fertigungstoleranzen für die Endloskette (11) und den Turas (1) sowie des Verschleißes der Endloskette (11) einen Eingriff des nockenartigen Elementes (9i) in die Zahnlücke (Zi) ermöglicht.

2. Turas nach Anspruch 1,
**dadurch gekennzeichnet,**
**dass** der Zahnkranzbereich mindestens zwei oder ein ganzzahliges Vielfaches von zwei gleichartig ausgebildete Umfangsabschnitte (U, U') aufweist, die bei konstanter Zahnbreite (3) mit einer von Segment (Si) zu Segment (Si) sich verändernden Teilkreisteilung (8) versehen wird, wobei die Summe aller abweichenden Teilkreisteilungen (8i) im jeweiligen Umfangsabschnitt (U, U') geteilt durch die Anzahl der Kettenzähne (2) dieses Abschnittes (U, U') einen Wert ergibt, der der konstanten Teilkreisteilung entspricht.

3. Turas nach Anspruch 1 und 2,
**dadurch gekennzeichnet,**
**dass** bezogen auf die konstante Teilkreisteilung in jedem Umfangsabschnitt (U,U') die Summe der Überschreitungen gleich ist der Summe der Unterschreitungen der Teilkreisteilung (8).

4. Turas nach den Ansprüchen 1-3,
**dadurch gekennzeichnet,**
**dass** im Falle einer abnehmenden Teilkreisteilung (8) bezogen auf die Drehrichtung (4) des Turas (1) im jeweiligen durch einen nach- und einen voreilenden Kettenzahn (2) gebildeten Segment (Sᵢ) das Spiel (Gᵢ) zwischen dem nockenartigen Element (9ᵢ) und der Zahnlücke (Zᵢ) von einem Höchstwert auf einen Kleinstwert abnimmt und im Falle einer zunehmenden Teilkreisteilung (8) es umgekehrt ist.

5. Turas nach Anspruch 4,
**dadurch gekennzeichnet,**
**dass** im Falle einer abnehmenden Teilkreisteilung (8) bezogen auf die Drehrichtung (4) des Turas (1) die Beträge der Abnahme des Spiels (Gᵢ) immer kleiner werden und im Falle einer zunehmenden Teilkreisteilung (8) es umgekehrt ist.

6. Turas nach Anspruch 4 und 5,
**dadurch gekennzeichnet,**
**dass** das Spiel (Gᵢ) im jeweiligen Segment (Sᵢ) sich aus einem Teilspiel A (TₛA) zwischen der vorlaufenden Flanke (5) des nacheilenden Kettenzahnes (2.1) und der nacheilenden Flanke (13) des nockenartigen Elementes (9i) und einem Teilspiel B (TₛB) zwischen der nacheilenden Flanke (6) des voreilenden Kettenzahnes (2.2) und der vorauseilenden Flanke (12) des nockenartigen Elementes (9ᵢ) zusammensetzt.

7. Turas nach Anspruch 6,
**dadurch gekennzeichnet,**
**dass** die Summe aus Teilspiel A (TₛA) + Teilspiel B (TₛB) in jedem Segment
(Sᵢ) verschieden ist.

8. Turas nach Anspruch 6 und 7,
**dadurch gekennzeichnet,**
**dass** im Falle einer abnehmenden Teilkreisteilung (8) bezogen auf die Drehrichtung (4) des Turas (1) das Teilspiel A (TsA) im ersten Segment (S1) größer ist als das Teilspiel B (TₛB) und von Segment (Sᵢ) zu Segment (Sᵢ) sich dieses Verhältnis im Sinne eines abnehmenden Teilspiels A (TₛA) und eines zunehmenden Teilspiels B (TₛB) ändert.

## Claims

1. Drive wheel for a track-laying truck, in particular for lattice tower cranes, which is provided on the circumference with chain teeth and cooperates with an endless chain, the endless chain comprising individual chain links which have a baseplate, and each chain link having two guiding webs which are situated in the running direction and are disposed symmetrically relative to the centre and at a spacing from each other, and a more deeply situated cam-like element, which connects the two webs, being disposed between the two guiding webs, which element meshes with the chain teeth of the drive wheel,
**characterised in that**
the toothed ring region has at least two circumferential portions (U, U') which, at constant tooth width (3), are provided with a transverse pitch (8) which changes from segment (Si) to segment (Si), the sum of all the deviating transverse pitches (8ᵢ) of the respective circumferential portion (U, U') divided by the number of chain teeth (2) of this circumferential portion (U, U') producing a value which corresponds to the constant transverse pitch and, relative to the direction of rotation (4) of the drive wheel (1), the transverse pitch (8), in each circumferential portion (U, U'), decreases from a maximum value to a minimum value or increases from a minimum value to a maximum value and, in the transition from one circumferential portion (U) to the adjacent one (U'), the greatest difference in the transverse pitch (8) occurring and the smallest occurring minimum value of the transverse pitch (8) being selected such that, relative to the cam-like element (9i) of the endless chain (11), which engages in the tooth gap (Zi), there remains a clearance (Gₛᵢ), which makes possible, taking into account the manufacturing tolerances for the endless chain (11) and the drive wheel (1), as well as the wear of the endless chain (11), engagement of the cam-like element (9i) in the tooth gap (Zi).

2. Drive wheel according to claim 1,
**characterised in that**
the toothed ring region has at least two or an integer multiple of two similarly configured circumferential portions (U, U') which, at constant tooth width (3), are provided with a transverse pitch (8) which changes from segment (Si) to segment (Si), the sum of all the deviating transverse pitches (8i) in the respective circumferential portion (U, U') divided by the number of chain teeth (2) of this portion (U, U') producing a value which corresponds to the constant transverse pitch.

3. Drive wheel according to claim 1 and 2,
**characterised in that**,
relative to the constant transverse pitch, in each circumferential portion (U, U') the sum of the excesses is equal to the sum of the undershoots of the transverse pitch (8).

4. Drive wheel according to claims 1 - 3,
**characterised in that**,
in the case of a decreasing transverse pitch (8) relative to the direction of rotation (4) of the drive wheel (1), in the segment (Sᵢ) which is formed respectively by a trailing and leading chain tooth (2), the clearance (Gᵢ) between the cam-like element (9ᵢ) and the tooth gap (Zᵢ) decreases from a maximum value to a minimum value and, in the case of an increasing transverse pitch (8), the reverse happens.

5. Drive wheel according to claim 4,
**characterised in that**,
in the case of a decreasing transverse pitch (8) relative to the direction of rotation (4) of the drive wheel (1), the size of the decrease in the clearance (Gᵢ) becomes smaller and smaller and, in the case of an increasing transverse pitch (8), the reverse happens.

6. Drive wheel according to claim 4 and 5,
**characterised in that**
the clearance (Gᵢ) in the respective segment (Sᵢ) is composed of a partial clearance A (TₛA) between the leading flank (5) of the trailing chain tooth (2.1) and the trailing flank (13) of the cam-like element (9i) and of a partial clearance B (TₛB) between the trailing flank (6) of the leading chain tooth (2.2) and the leading flank (12) of the cam-like element (9ᵢ).

7. Drive wheel according to claim 6,
**characterised in that**
the sum of partial clearance A (TₛA) + partial clearance B (TₛB) is different in each segment (Sᵢ).

8. Drive wheel according to claim 6 and 7,
**characterised in that**,
in the case of a decreasing transverse pitch (8) relative to the direction of rotation (4) of the drive wheel (1), the partial clearance A (TₛA) in the first segment (S1) is greater than the partial clearance B (TₛB) and this relationship changes from segment (Sᵢ) to segment (Sᵢ) in the sense of a decreasing partial clearance A (TₛA) and an increasing partial clearance B (TₛB).

## Revendications

1. Barbotin pour une chenille en particulier pour grues à mât en treillis, lequel est pourvu de dents de chaîne sur le pourtour et coopère avec une chaîne sans fin, la chaîne sans fin étant composée de maillons de chaîne présentant une plaque de base et chaque maillon de chaîne présentant deux étais de guidage situés dans le sens de la marche et agencés symétriquement par rapport au milieu et à distance l'un de l'autre, et un élément de type came situé plus profond et reliant les deux étais étant agencé entre les deux étais de guidage, lequel élément s'engrène dans les dents de chaîne du barbotin,
**caractérisé en ce que** la zone de couronne dentée présente au moins deux sections de périmètre (U, U'), lesquelles sont pourvues, la largeur de dent (3) étant constante, d'un pas transversal (8) changeant de segment (Si) en segment (Si), la somme de tous les pas transversaux (8i) divergents d'une section de périmètre (U, U') divisée par le nombre de dents de chaîne (2) de cette section de périmètre (U, U') donnant une valeur qui correspond au pas transversal constant et le pas transversal (8), rapporté au sens de rotation (4) du barbotin (1), diminuant d'une valeur maximale à une valeur minimale ou augmentant d'une valeur minimale à une valeur maximale sur chaque section de périmètre (U, U'), et la plus grande différence de pas transversal (8) apparaissant dans la zone de transition entre une section de périmètre (U) et la section consécutive (U'), et la plus petite valeur minimale du pas transversal (8) étant choisie de telle façon que, par rapport à l'élément de type came (9i) de la chaîne sans fin (11) s'engrenant dans l'entredent (Zi), il reste un jeu (Gₛᵢ) qui permet, en tenant compte des tolérances de fabrication pour la chaîne sans fin (11) et le barbotin (1) ainsi que de l'usure de la chaîne sans fin (11), un engrènement de l'élément de type came (9i) dans l'entredent (Zi).

2. Barbotin selon la revendication 1, **caractérisé en ce que** la zone de couronne dentée présente au moins deux, ou un multiple entier de deux, sections de périmètre (U, U') réalisées identiques, lesquelles sont pourvues, la largeur de dent (3) étant constante, d'un pas transversal (8) changeant de segment (Si) en segment (Si), la somme de tous les pas transversaux (8i) divergents dans une section de périmètre (U, U') divisée par le nombre de dents de chaîne (2) de cette section (U, U') donnant une valeur qui correspond au pas transversal constant.

3. Barbotin selon les revendications 1 et 2,
**caractérisé en ce que**, rapporté au pas transversal constant, sur chaque section de périmètre (U, U'), la somme des dépassements est égale à la somme des valeurs inférieures du pas transversal (8).

4. Barbotin selon les revendications 1 à 3,
**caractérisé en ce que**, dans le cas d'un pas transversal (8) décroissant rapporté au sens de rotation (4) du barbotin (1) dans un segment (Sᵢ) formé par une dent de chaîne (2) avancée et par une dent de chaîne (2) arrière, le jeu (Gᵢ) entre l'élément de type came (9ᵢ) et l'entredent (Zᵢ) diminue d'une valeur maximale à une valeur minimale, et dans le cas d'un pas transversal (8) croissant, c'est le contraire.

5. Barbotin selon la revendication 4,
**caractérisé en ce que**, dans le cas d'un pas transversal (8) décroissant rapporté au sens de rotation (4) du barbotin (1), les valeurs de la diminution du jeu (Gᵢ) diminuent et, dans le cas d'un pas transversal (8) croissant, c'est le contraire.

6. Barbotin selon les revendications 4 et 5,
**caractérisé en ce que** le jeu (Gᵢ) dans un segment (Si) se compose d'un jeu partiel A (TₛA) entre le flanc avancé (5) de la dent de chaîne arrière (2.1) et le flanc arrière (13) de l'élément de type came (9i) et d'un jeu partiel B (TₛB) entre le flanc arrière (6) de la dent de chaîne avancée (2.2) et le flanc avancé (12) de l'élément de type came (9i).

7. Barbotin selon la revendication 6,
**caractérisé en ce que** la somme du jeu partiel A (TₛA) et du jeu partiel B (TₛB) est différente dans chaque segment (Sᵢ).

8. Barbotin selon les revendications 6 et 7,
**caractérisé en ce que**, dans le cas d'un pas transversal (8) décroissant rapporté au sens de rotation (4) du barbotin (1), le jeu partiel A (TₛA) dans le premier segment (S1) est supérieur au jeu partiel B (TₛB) et ce rapport change de segment (Si) en segment (Si) au sens d'un jeu partiel A (TₛA) décroissant et d'un jeu partiel B (TₛB) croissant.
